**Europäisches Patentamt**

**European Patent Office**

**Office européen des brevets**

(19)

(11) Veröffentlichungsnummer : **0 330 160 B1**

(12) ## EUROPÄISCHE PATENTSCHRIFT

(45) Veröffentlichungstag der Patentschrift :
**08.07.92 Patentblatt 92/28**

(51) Int. Cl.[5] : **A01N 37/02**, // (A01N37/02,
37:02, 31:02)

(21) Anmeldenummer : **89103045.4**

(22) Anmeldetag : **22.02.89**

(54) **Verfahren und Mittel zur Bekämpfung der Pfirsichmotte.**

(30) Priorität : **24.02.88 DE 3805751**

(43) Veröffentlichungstag der Anmeldung :
**30.08.89 Patentblatt 89/35**

(45) Bekanntmachung des Hinweises auf die
Patenterteilung :
**08.07.92 Patentblatt 92/28**

(84) Benannte Vertragsstaaten :
**ES FR GR IT**

(56) Entgegenhaltungen :
**EP-A- 0 010 126
EP-A- 2 531 612
JOURNAL OF ECONOMIC ENTOMOLOGY,
Band 68, Nr. 3, 16. Juni 1975, Seiten 358-360,
College Park, Maryland, US; R.E. RICE et
al.:"Peach twig borer: Field use of a synthetic
sex pheromone"
CHEMICAL ABSTRACTS, Band 104, Nr. 11, 17.
März 1986, Seite 637, Zusammenfassung Nr.
88333k, Columbus, Ohio, US; V.N. ODINOKO-
Vet al.: "Insect pheromones and their analogs. XII. Synthesis of 5-decenyl acetate
isomers - sex pheromones of Anarsia lineatellaand Agrotis segetum", & KHIM. PRIR. SOE-
DIN. 1985, (3), 395-8
Insect Pheromones in Plant Protection, Jutsum et al, p. 328
Erw.Entomol. vol. 4, no. 4 pp 580-582**

(73) Patentinhaber : **BASF Aktiengesellschaft
Carl-Bosch-Strasse 38
W-6700 Ludwigshafen (DE)**

(72) Erfinder : **Becker, Rainer, Dr.
Im Haseneck 22
W-6702 Bad Duerkheim (DE)**
Erfinder : **Buschmann, Ernst, Dr.
Georg-Ludwig-Krebs-Strasse 10
W-6700 Ludwigshafen (DE)**
Erfinder : **Mackenroth, Wolfgang,Dr.
Seebacher Strasse 37
W-6702 Bad Duerkheim (DE)**
Erfinder : **Schuermann, Gregor, Dr.
Werderstrasse 40
W-6900 Heidelberg (DE)**
Erfinder : **Seufert, Walter, Dr.
Laerchenweg 19
W-6720 Speyer (DE)**
Erfinder : **Seppelt, Wolfgang, Dr.
Stettiner Strasse 1a
W-6712 Bobenheim-Roxheim (DE)**
Erfinder : **Krieg, Wolfgang, Dr.
Saarstrasse 17
W-6721 Weingarten (DE)**
Erfinder : **Neumann, Ulrich, Dr.
Am Deutschhof 25
W-6707 Schifferstadt (DE)**

## Beschreibung

Die vorliegende Erfindung betrifft ein Verfahren und Mittel zur Bekämpfung der Pfirsichmotte Anarsia lineatella.

Die Pfirsichmotte, Anarsia lineatella Zell. aus der Familie der Gelechiidae, ist in der paläarktischen Region bis hin nach Mittelasien, dem Balkan und Nordafrika verbreitet. In wärmeren Ländern wie Frankreich, Italien, Spanien, Portugal, Israel, Marokko und im intensiven Obstanbau ist Anarsia lineatella ein Großschädling. Zu den Wirtspflanzen werden Pfirsich, Aprikose, Mandel seltener Pflaume, Apfel und Kirsche gezählt (Audemard 1974, INRA Publ. Nr. 20).

Im gemäßigten Klima Mitteleuropas treten jährlich zwei Generationen auf. Die Larven überwintern, die Falter der ersten Generation fliegen im Juni/Juli. Die aus den Eiern schlüpfenden Raupen dringen meist an einer Blattbasis oder durch eine Knospe in junge Triebe ein und zerstören das Mark, indem sie von oben nach unten einen Fraßgang anlegen (peach twig borer). Die Larve verläßt dann den absterbenden Trieb bohrt sich in einen neuen ein und kann somit mehrere Triebe vernichten.

In ariden Gebieten ist der Fruchtbefall durch die Raupen der zweiten Generation mit Falterflug im August/September von größter wirtschaftlicher Bedeutung.

Bisher wird die Pfirsichmotte mit den üblichen Mitteln, d.h. durch Anwendung von Insektiziden unspezifisch bekämpft. Eine gezielte Methode konnte nach Identifizierung des Sexuallockstoffes der Pfirsichmotte (Roelofs et al., Environm. Entomol. 4, 580ff, 1975) zur Anwendung kommen.

Es ist bekannt, daß bei Schmetterlingen von paarungsbereiten weiblichen Tieren Sexuallockstoffe (Pheromone) erzeugt und in die Umgebung ausgeschieden werden. Männliche Schmetterlinge derselben Art können dann mit Hilfe dieses Riechstoffes die Weibchen auffinden. Rice und Jones stellten 1975 in J. Economic Entomology 68, 358-360 fest, daß ein Gemisch aus 5 mg E5-Decen-1-glacetat und 1 mg E5-Decen-1-ol eine gute Lockwirkung hat. Das Pheromon kann also zum Fallenfang eingesetzt werden.

Grundsätzlich gibt es drei verschiedene Möglichkeiten, Sexuallockstoffe im Pflanzenschutz anzuwenden:

### 1. Monitortechnik

Sogenannte Pheromonfallen, bestückt mit synthetischen Sexuallockstoffködern, werden in potentiellen Befallsgebieten ausgehängt. Der Fallenfang von männlichen Faltern erbringt den Nachweis des Auftretens des Schädlings. Außerdem lassen sich Hinweise zur Befallstärke und auf den richtigen Zeitpunkt der Bekämpfung ableiten.

### 2. Abfangtechnik

Man kann den Lockstoff mit insektiziden Wirkstoffen kombinieren. Es besteht die Möglichkeit, dem Köder/der Falle, Insektizide zuzusetzen oder aber nur in unmittelbarer Umgebung der Falle zu behandeln. Damit dann der größte Teil der aus weiter Entfernung angelockten männlichen Falterbevölkerung abgetötet werden kann. Die Biotopbelastung ist auf ein vertretbares Maß reduziert.

### 3. Konfusionstechnik

Schließlich kann der Schädling durch das Verfahren der Luftraumsättigung mit Sexuallockstoffen oder ähnlich wirkende Substanzen bekämpft werden. Die männlichen Schmetterlinge werden am Auffinden der Weibchen gestört und somit die Paarung der Tiere verhindert. In diesem Fall wird im gesamten Bereich der zu schützenden Pflanzenkultur eine größere Menge des Lockstoffes im Luftraum verteilt, so daß die Männchen überall die Gegenwart des Duftstoffes empfinden können und ihr normales Orientierungsverhalten gestört ist.

Vor allem bei der dritten Methode (Konfusionsmethode) handelt es sich um eine äußerst selektive und auch effektive Möglichkeit zur Bekämpfung einer unerwünschten Spezies unter Schonung der Nicht-Zielorganismen, insbesondere aller Nützlinge.

Auch nach dieser Methode werden nur verhältnismäßig kleine Mengen der Wirkstoffe, welche oft nur Bruchteilen der üblichen Dosen der klassischen Insektizidwirkstoffe entsprechen, benötigt (vgl. Birch ed., Pheromones, North Holland Publ. Co., 1974).

Die Methoden 1 und 2 sind insofern nachteilig, als der Lockstoff synthetischer Herkunft seinem natürlichen Vorbild bezüglich Struktur und Reinheit exakt gleichen muß (Minks und Voermann, Entomologia exp. and appl. 16 (1973) 341-49 sowie Wegler, Chemie der Pflanzenschutz- und Schädlingsbekämpfungsmittel (1981) Bd. 6, S. 167). Technische Gemische o.ä. haben bei Fallenfangversuchen regelmäßig versagt. Aus den nach Methoden 1 und 2 gewonnenen Erfahrungen war anzunehmen, daß auch Methode 3 nur mit hochreinen Pheromonen der Pfirsichmotte zu verwirklichen sein würde. Die Herstellung hochreiner Pheromone erfordert jedoch aufwendige Trennoperationen, wie präparative Gaschromatographie an Ag-beschichtetem Trägermaterial, so daß ein derart hergestelltes Material keine wirtschaftliche großflächige Anwendung erlaubt.

Es bestand nun die Aufgabe, ein Mittel zur Bekämpfung der Pfirsichmotte zu finden, das eine wirtschaftliche großflächige Anwendung ermöglicht, das es insbesondere erlaubt, gemäß der oben beschriebenen Konfusionsmethode eine Bekämpfung des Schädlings ohne zusätzlichen Einsatz von klassischen Insektiziden zu gewährleisten.

Demgemäß wurde ein Mittel zur Bekämpfung der Pfirsichmotte, Anarsia lineatella, gefunden, enthaltend ein Gemisch aus E-5-Decen-1-ol (I), E-5-Decen-1-ylacetat (II) sowie Z-5-Decen-1-ol (III) und Z-5-Decen-1-ylacetat (IV), wobei der Anteil der Z-Isomeren (III) und (IV) bis zu 50 Gew.%, bezogen auf die Mischung (I) bis (IV), ausmacht.

Vorteilhaft sind Mischungen, in denen der Anteil der Z-Isomeren (III) und (IV) 1 bis 35, insbesondere 1 bis 25, vorzugsweise 2 bis 20 Gew.%, bezogen auf die Mischung (I) bis (IV), ausmacht.

Die erfindungsgemäßen Mittel enthalten vorteilhaft 1 bis 50 Gew.% E-5-Decen-1-ol (I) und 50 bis 99 Gew.% E-5-Decen-1-glacetat (II), jeweils bezogen auf (I)+(II) sowie 1 bis 50 Gew.% Z-5-Decen-1-ol (III) und 50 bis 99 Gew.% Z-5-Decen-1-glacetat (IV), jeweils bezogen auf (III)+(IV).

Bevorzugt sind Mittel, in denen das Verhältnis Acetat (II) zu Alkohol (I) bei 50:50, insbesondere 65:35, besonders bevorzugt 80:20 liegt. Entsprechende Mengenverhältnisse sind für die Z-Isomeren (III) und (IV) bevorzugt.

Im Hinblick auf Wegler sowie Minks und Voermann (loc.cit.) war es überraschend, daß in Versuchen mit der Verwirrungstechnik die Begattung der Weibchen aufgrund der oben beschriebenen Orientierungsstörung der Männchen auch bei Verwendung der E-Z-Gemische praktisch vollständig unterbleibt, zumal bekannt ist, daß selbst isomerenreine naturidentische Pheromone nicht immer zur Paarungsunterbrechung nach der Konfusionsmethode geeignet sind, weil eventuell andere Faktoren wie beispielsweise optische Orientierung auch im pheromonbehandelten Feld die Geschlechterfindung ermöglichen (siehe z.B. M. Kehat et al., Phytoparasitica 13 (3-4) 215-220).

Die Herstellung der Verbindungen (I), (II), (III) und (IV) ist z.B. beschrieben in M.S. Chadha et al., Indian Journal of Chemistry 22B, 1221-23 (1983), S. Warren, Tetrahedron Lett. 25 (3), 357-360 (1984) oder V.N. Odinokov et al., Chem.Nat.Comp. 21, 369-371 (1985).

Man geht zumeist von entsprechenden Alkinolen aus, die in üblicher Weise zum trans- oder cis-Alkenol reduziert werden können. (P.I. Suirshaya, C.C. Leznoff, J. Waetherslon, J.E. Lang, J.Chem.Eng. Data 24 (2) 152-155 (1979), C. Henrick, Tetrahedron 33 1845 (1977)). Die Überführung in die entsprechenden Acetate kann in an sich bekannter Weise, z.B. mit Acetylchlorid oder Acetanhydrid in Gegenwart von Pyridin, Triethylamin oder einer ähnlichen Base erfolgen.

Die technische Herstellung der erfindungsgemäßen Mischungen kann vorteilhaft in der Weise vorgenommen werden, daß man den Tetrahydropyranylether von 5-Hexin-1-ol in flüssigem Ammoniak und Lithiumamid als Base mit n-Butylbromid alkyliert und das Rohprodukt über einem $Pd/CaCO_3$-Kontakt (Chinolin-vergiftet) hydriert (W. Roelofs et al., Environ. Entomol. 4 (4), 580-2 (1975)). Nach saurer Abspaltung des Tetrahydropyranylrestes erfolgt photochemische Umlagerung des Z5-Decenols zu einem E/Z-Decenolgemisch, wobei der Anteil des E-Isomeren im allgemeinen bei 50 bis 80 Gew.%, bezogen auf das E/Z-Gemisch, liegt und anschließende Acetylierung. Diese Photoisomerisierung ist z.B. in DE-OS 34 17 943 beschrieben. Anschließend werden die Alkohole in die Acetate überführt (s. Chem.Nat.Comp. 21, 1985, S. 369-371).

Das Mittel kann zusammen mit üblichen Hilfsstoffen, z.B. entsprechend präparierten Streifen aus Kunststoff, Bindegarnen, lockstoffgefüllten Ampullen o.ä. angewendet werden und auch andere herstellungsbedingte Verunreinigungen enthalten.

Zur Formulierung des Wirkstoffs kommen sowohl flüssige wie auch feste Präparationen in Frage. Als Lösungsmittel kommen hochsiedende, aromatische, aliphatische oder cycloaliphatische Verbindungen in Betracht. Neben Kohlenwasserstoffen eignen sich Ester, Ether oder Ketone besonders gut. Typische Vertreter dieser Klassen sind z.B.: Xylol, Methyl naphthaline, Paraffinöle, Cyclohexanon, Ethylglykolacetat, Isophoron und Dibutylphthalat. Diese Lösungsmittel könne allein oder in Mischungen mit anderen Komponenten Verwendung finden. Die den Verbindungen (III) bzw. (IV) entsprechenden gesättigten $C_{10}$-Ester und deren Homologe sind besonders geeignete Formulierungshilfsmittel und können als Synergisten angesehen werden, da sie die Wirkung von (I), (II), (III) und (IV) verstärken.

Weiterhin können Lösungen in pflanzlichen, tierischen oder synthetischen Ölen oder Fetten und anderen verdunstungshemmenden Lösungsmitteln mit niedrigem Dampfdruck wie z.B. Dioctylphthalat zum Zwecke der Wirkungsverlängerung hergestellt werden.

Desweiteren ist es möglich, den Wirkstoff in oder an natürliche oder synthetische feste Träger wie Gummi, Kork, Zellulose, Kunststoffe, gemahlene Kohle, Holzmehl, Silikate, Bimskies, gebrannten Ton oder ähnliche feste Trägerstoffe zu binden oder in speziellen Kapselformulierungen oder Kunststoffbehältern einzusetzen, um so eine gleichmäßige Abgabe an die Luft über längere Zeiträume hinweg zu erreichen. Außerdem kann der Wirkstoff aus geeigneten Behältern (Kapillaren oder anderen Gefäßen) durch enge Öffnungen oder durch Diffusion durch die Behälterwand zur Verdunstung gebracht werden, wodurch über längere Zeiträume hinweg besonders gleichmäßige Duftkonzentrationen erzielt werden, sowie aus mehrschichtigen Kunststoffplättchen, sogenannten Flakes.

Der Gehalt dieser Zubereitungen an Wirkstoff kann innerhalb weiter Grenzen schwanken. Generell kann das Verhältnis Wirkstoff : Zusatzstoff z.B. im Bereich von 10:1 bis $1:10^3$ liegen. In Kapselformulierungen oder anderen geeigneten Behältern kann z.B. der Wirkstoff in reiner, unverdünnter Form angewendet werden und sein Gewichtsanteil, bezogen auf die Gesamtformulierung, sehr hoch sein und bis zu 90 % betragen. Im allgemeinen genügen jedoch sehr geringe Wirkstoffkonzentrationen in den Zubereitungen, um die gewünschte Wirkung auf Anarsia-Männchen auszuüben. Bevorzugt ist ein Mengenverhältnis Wirkstoff : Zusatzstoff von 1:3 bis $1:10^2$, insbesondere 1:10 bis 1:100.

Man kann den Wirkstoff auch in vergleichsweise hohen Konzentrationen ausbringen, um die Männchen durch Desorientierung und Konfusion an der Paarung zu hindern. Für diese Methode eignen sich am besten Formulierungen mit schwerflüchtigen Zusatzstoffen, die den Wirkstoff protrahiert abgeben wie Gummi, Zellstoff, Wachse, Polymerisate oder verdunstungshemmende, schwerflüchtige Öle oder Paraffine sowie Formulierungen in Kapseln oder anderen Behältern (Kapillaren), die den Lockstoff entweder durch ihre Wandung oder durch enge Öffnungen abgeben (vgl. EP-A 256 549 oder 281 918).

Die nachfolgend beschriebenen Versuche zeigen die Verwendbarkeit der beschriebenen Mittel zur Bekämpfung der Pfirsichmotte.

Folgende Abkürzungen finden Verwendung:

| | |
|---|---|
| E5-Decen-1-ol | E-5-10-OH (I) |
| E5-Decen-1-ylacetat | E-5-10Ac (II) |
| Z5-Decen-1-ol | Z-5-10-OH (III) |
| Z5-Decen-1-ylacetat | Z-5-10Ac (IV) |

Versuche 1 bis 4

In einem Pfirsichmotte-Befallsgebiet wurden auf einer Parzelle der in Tabelle 1 angegebenen Größe pheromongetränkte PVC-Streifen ausgehängt. Die Zahl der Dispenser betrug 500/ha, die Wirkstoffmenge 45 g/ha.

Wirkstoffzusammensetzung:

77 Gew.% E5-10Ac, 3 Gew.% Z-5-10Ac,

19 Gew.% E5-10-OH, 1 Gew.% Z-5-10-OH,

Versuchsort: St. Marcel les Valence, Frankreich

Applikationstermine: 6.5., 3.6., 25.6., 10.7.1985 ca. 130 Pfirsichbäume pro 0,25 ha

Die Auswertung erfolgte mittels der Monitortechnik, indem man in der behandelten Parzelle wie auch einer unbehandelten Kontrollparzelle von 0,25 ha eine Lockstofffalle, bestückt mit einem Gummischlauchköder, der mit 10 mg E-5-10Ac und 2 mg E-5-10-OH getränkt war, im Blattwerk des Baumes aufhängte und auszählte, wieviele der gefundenen männlichen Falter auf der in dem Fallenkörper plazierten Klebefläche haften blieben.

Die Ergebnisse sind in Tabelle 1 zusammengestellt.

**Tabelle 2**

| Versuchsnummer | 5 | 6 |
|---|---|---|
| Parzellengröße (ha) | 2 | 1 |
| Fallenfang in der behandelten Parzelle | 6 | 0 |

Demgegenüber wurden in der Kontrollparzelle von 0,25 ha 130 Falter gefangen. In der behandelten Parzelle (0,25 ha) waren keine Früchte befallen, während in der Kontrollparzelle 10 Früchte/Baum Schäden aufwiesen.

4

Versuche 5 und 6

Dispenser: Polyethylenampullen mit Pheromonfüllung
Dispenserzahl   500/ha
Aufwandmenge: 200 g/ha
Wirkstoff:
67 Gew.% E-5-10Ac, 13 Gew.% Z5-10Ac
15 Gew.% E-5-10-OH,   5 Gew.% Z5-10-OH
        Versuchsorte: Avingnon (5), St. Marcel les Valence (6)
Applikationstermine: 22.4. und 30.6.1986

Die Auswertung erfolgte analog den Versuchen 1 bis 4, die Ergebnisse sind in Tabelle 2 zusammengefaßt:

Tabelle 1

| Versuchsnummer | 1 | 2 | 3 | 4 |
|---|---|---|---|---|
| 5 Parzellengröße (ha) | 0,25 | 1 | 0,75 | 1 |
| Fallenfang in der behandelten Parzelle | 0 | 11 | 14 | 7 |

Demgegenüber wurden in der Kontrollparzelle von 1 ha 75 Falter gefangen.

**Patentansprüche**

1. Mittel zur Bekämpfung der Pfirsichmotte (Anarsia lineatella) mittels der Konfusionsmethode, enthaltend ein Gemisch aus E-5-Decen-1-ol (I), E-5-Decen-1-glacetat (II) sowie Z-5-Decen-1-ol (III) und Z-5-Decen-1-glacetat (IV), wobei der Anteil der Z-Isomeren (III) und (IV) bis zu 50 Gew.%, bezogen auf die Mischung (I) bis (IV) ausmacht.

2. Mittel nach Anspruch 1, enthaltend (I), (II) sowie (III) und (IV), wobei der Anteil der Z-Isomeren (III) und (IV) bis zu 30 Gew.%, bezogen auf die Mischung (I) bis (IV), ausmacht.

3. Mittel nach Anspruch 1, enthaltend 1 bis 50 Gew.% E-5-Decen-1-ol (I) und 50 bis 99 Gew.% E-5-Decen-1-glacetat (II), jeweils bezogen auf (I)+(II) sowie 1 bis 50 Gew.% Z-5-Decen-1-ol (III) und 50 bis 99 Gew.% Z-5-Decen-1-glacetat (IV), jeweils bezogen auf (III)+(IV).

4. Mittel nach Anspruch 1, enthaltend (I), (II) sowie (III) und (IV) sowie übliche Zusatzstoffe und Hilfsmittel.

5. Verfahren zur Bekämpfung der Pfirsichmotte mittels der Konfusionsmethode, dadurch gekennzeichnet, daß man ein Mittel nach einem der Ansprüche 1 bis 4 in einer solchen Menge anwendet, daß die männlichen Tiere der Art bei der Auffindung der weiblichen Tiere gestört werden.

**Claims**

1. An agent for controlling the peach twig borer (Anarsia lineatella) by the confusion method, con-taining a mixture of E-5-decen-1-ol (I), E-5-decen-1-yl acetate (II) and Z-5-decen-1-ol (III) and Z-5-decen-1-yl acetate (IV), the amount of the Z isomers (III) and (IV) being up to 50% by weight, based on the mixture (I) to (IV).

2. An agent as claimed in claim 1, containing (I), (II) and (III) and (IV), the amount of the Z isomers (III) and (IV) being up to 30% by weight, based on the mixture (I) to (IV).

3. An agent as claimed in claim 1, containing from 1 to 50% by weight of E-5-decen-1-ol (I) and from 50 to 99% by weight of E-5-decen-1-yl acetate (II), the percentages in each case being based on (I) + (II), and from 1 to 50% by weight of Z-5-decen-1-ol (III) and from 50 to 99% by weight of Z-5-decen-1-yl acetate (IV), the percentages in each case being based on (III) + (IV).

4. An agent as claimed in claim 1, containing (I), (II) and (III) and (IV) and conventional additives and assistants.

5. A method for controlling the peach twig borer by the confusion method, wherein an agent as claimed in any of claims 1 to 4 is used in an amount such that the male animals of the species are prevented from finding the female animals.

**Revendications**

1. Produit pour combattre la petite mineuse du pêcher (Anarsia lineatella) par la technique de la confusion, contenant un mélange de E-5-décène-1-ol (I), d'acétate de E-décène-1-yle (II) ainsi que de Z-5-décène-1-ol, (III) et d'acétate de Z-5-décène-1-yle (IV), la proportion des isomères Z (III) et (IV) représentant jusqu'à 50 % du poids du mélange de (I) à (IV).

2. Produit selon la revendication 1, contenant (I), (II), ainsi que (III) et (IV), la proportion des isomères Z (III) et (IV) représentant jusqu'à 30 % du poids du mélange de (I) à (IV).

3. Produit selon la revendication 1, contenant 1 à 50 % en poids de E-5-décène-1-ol (I) et 50 à 99 % en poids d'acétate de E-décène-1-yle (II), dans les deux cas par rapport à (I) + (II), ainsi que 1 à 50 % de Z-5-décène-1-ol (III) et 50 à 99 % en poids d'acétate de Z-décène-1-yle (IV), dans les deux cas par rapport à (III) + (IV).

4. Produit selon la revendication 1, contenant (I), (II) ainsi que (III) et (IV) avec des additifs et produits auxiliaires usuels.

5. Procédé pour combattre la petite mineuse du pêcher par la technique de la confusion, caractèrisé en ce que l'on utilise un produit selon l'une des revendications 1 à 4, en quantité telle que les individus mâles de l'espèce soient perturbés dans la recherche des animaux femelles.